(19) Europäisches Patentamt
European Patent Office
Office européen des brevets

(11) Veröffentlichungsnummer: **0 294 641 B1**

(12) **EUROPÄISCHE PATENTSCHRIFT**

(45) Veröffentlichungstag der Patentschrift: **02.09.92**

(51) Int. Cl.5: **C07C 233/64**, C23F 11/14

(21) Anmeldenummer: **88108232.5**

(22) Anmeldetag: **24.05.88**

(54) **Polyaralkylierte Hydroxybenzamide, Verfahren zu ihrer Herstellung und ihre Verwendung.**

(30) Priorität: **06.06.87 DE 3719101**

(43) Veröffentlichungstag der Anmeldung:
**14.12.88 Patentblatt 88/50**

(45) Bekanntmachung des Hinweises auf die Patenterteilung:
**02.09.92 Patentblatt 92/36**

(84) Benannte Vertragsstaaten:
**AT DE FR GB NL**

(56) Entgegenhaltungen:
**EP-A- 0 031 924**
**US-A- 4 673 765**

(73) Patentinhaber: **BAYER AG**
**W-5090 Leverkusen 1 Bayerwerk(DE)**

(72) Erfinder: **Scholl, Thomas, Dr.**
**Witzfeldstrasse 47a**
**W-4005 Meerbusch(DE)**
Erfinder: **Wegner, Christian, Dr.**
**Roggendorfstrasse 67**
**W-5000 Köln 80(DE)**
Erfinder: **Fröhlich, Christian, Dr.**
**Doerperhofstrasse 14**
**W-4150 Krefeld(DE)**
Erfinder: **Botta, Artur, Dr.**
**Bodelschwinghstrasse 119**
**W-4150 Krefeld(DE)**
Erfinder: **Rother, Heinz-Joachim, Dr.**
**Dahlerdyk 124 E**
**W-4150 Krefeld(DE)**

**EP 0 294 641 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue polyaralkylierte Hydroxybenzoesäureamide, Verfahren zu deren Herstellung sowie deren Verwendung als Korrosionsinhibitoren.

Die neuen polyaralkylierten Hydroxybenzoesäureamide entsprechen der Formel

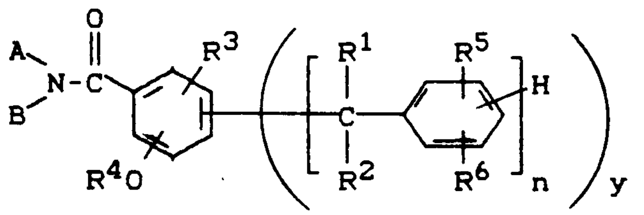

(I),

in der

| | |
|---|---|
| n | für eine ganze Zahl von 1 bis 10 und |
| y | für eine ganze Zahl von 1 bis 3 stehen, mit der Maßgabe, daß das Produkt n • y höchstens den Wert 20, vorzugsweise einen Wert von 2 bis 10, besonders bevorzugt einen Wert von 3 bis 8 annimmt, |
| $R^1$ und $R^2$ | unabhängig voneinander Wasserstoff oder $C_1$-$C_4$-Alkyl bedeuten, |
| $R^3$ | für Wasserstoff, Hydroxy, O-$C_1$-$C_{18}$-Alkyl, $C_1$-$C_{18}$-Alkyl, $C_1$-$C_{18}$-Alkoxycarbonyl, Halogen, die Carboxyl-, Carbonamid-, Sulfo-, Sulfonat- oder Aminogruppe steht, |
| $R^4$ | Wasserstoff, $C_1$-$C_{18}$-Alkyl, $C_7$-$C_{18}$-Aralkyl oder $C_1$-$C_{18}$-Alkylcarbonyl bedeutet, |
| $R^5$ und $R^6$ | unabhängig voneinander für Wasserstoff, Hydroxy, Halogen oder $C_1$-$C_{18}$-Alkyl steht, |
| A und B | gleich oder verschieden sind und Wasserstoff, $C_1$-$C_{18}$-Alkyl, $C_7$-$C_{18}$-Aralkyl, $C_6$-$C_{15}$-Aryl, $C_1$-$C_{18}$-Alkylcarbonyl bedeuten oder für eine Gruppe der Formeln |

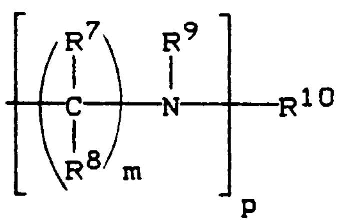

oder

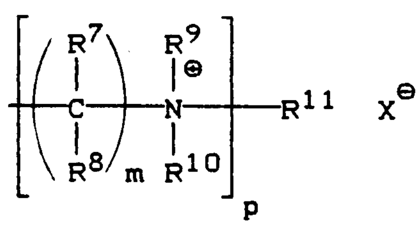

(a) (b)

(II)

stehen, in denen

$R^7$ bis $R^{11}$ unabhängig voneinander Wasserstoff, $C_1$-$C_{18}$-Alkyl, $C_7$-$C_{18}$-Aralkyl oder $C_6$-$C_{15}$-Aryl bedeuten,

$X^{\ominus}$ ein Anion, vorzugsweise ein Halogenid-, ein Alkylsulfat- oder ein Arylsulfonat-Ion,

m eine Zahl von 2 bis 8 und

p eine Zahl von 1 bis 50

bedeuten.

Als Alkylreste in Formel (I) kommen bevorzugt solche mit 1 bis 12 Kohlenstoffatomen, besonders bevorzugt 1 bis 6, insbesondere 1 bis 4, Kohlenstoffatomen in Frage. Genannt seien: Methyl, Ethyl, Propyl, n-Butyl, Isobutyl, Hexyl, Ethylhexyl, Decyl und Stearyl, bevorzugt Methyl, Ethyl, n-Butyl und Ethylhexyl, besonders bevorzugt Methyl, Ethyl und n-Butyl.

Als Alkoxyreste kommen bevorzugt solche mit 1 bis 12 Kohlenstoffatomen, besonders bevorzugt 1 bis 6 Kohlenstoffatomen in Frage. Genannt seien: Methoxy, Ethoxy, Propoxy, Butoxy, Hexoxy, Cyclohexyloxy, Dodecyloxy, bevorzugt Methoxy, Ethoxy, Propoxy und Butoxy, besonders bevorzugt Methoxy, Ethoxy und Propoxy.

Als Alkoxycarbonylreste kommen bevorzugt solche mit 1 bis 12 Kohlenstoffatomen, besonders bevorzugt 1 bis 6 Kohlenstoffatomen in Frage. Genannt seien: Methoxycarbonyl, Ethyoxycarbonyl, Propoxycarbonyl, Butoxycarbonyl, Hexyloxycarbonyl, Decyloxycarbonyl und Stearyloxycarbonyl, bevorzugt Methoxycarbonyl, Ethoxycarbonyl, Propoxycarbonyl und Butoxycarbonyl, besonders bevorzugt Methoxycarbonyl, Ethoxycarbonyl und Propoxycarbonyl.

Als Arylreste kommen bevorzugt solche mit 6 bis 15, bevorzugt 6 bis 10, insbesondere 6 Kohlenstoffatomen in Frage, beispielsweise der Naphthyl-, Methylnaphthyl, Diphenyl-, Tolyl-, Butylphenylrest, vorzugsweise der Phenylrest.

Als Aralkylreste kommen in Frage bevorzugt solche mit 7 bis 12 Kohlenstoffatomen, besonders bevorzugt solche mit 7 bis 9 Kohlenstoffatomen. Genannt seien: Benzyl, α-Methylbenzyl und α-, α-Dimethylbenzyl, 4-Methylbenzyl, tert.-Butylbenzyl, Methoxybenzyl und 3-Chlorbenzyl, bevorzugt Benzyl und α-Methylbenzyl.

Als Halogen seien genannt: Fluor, Chlor, Brom, bevorzugt Chlor und Brom, besonders bevorzugt Chlor.

In der obengenannten Formel steht n bevorzugt für 1 bis 10, m für 2 bis 3, p für 1 bis 14 und y für 1 bis 3.

Bevorzugt sind neue polyaralkylierte Hydroxybenzoesäureamide der Formel

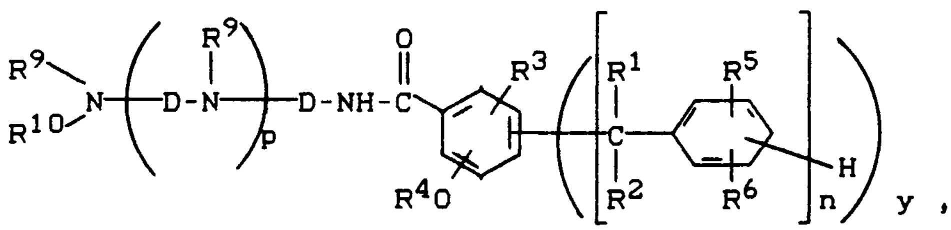

(III)

in der

$R^1$ bis $R^6$, $R^9$ und $R^{10}$ sowie n, p und y die unter Formeln (I) und (II) angegebene Bedeutung haben und D für einen $-(CH_2)_2-$,

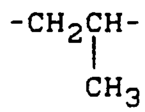

oder $-(CH_2)_3$-Rest steht.

Besonders bevorzugt sind Verbindungen der unten angegebenen Formeln:

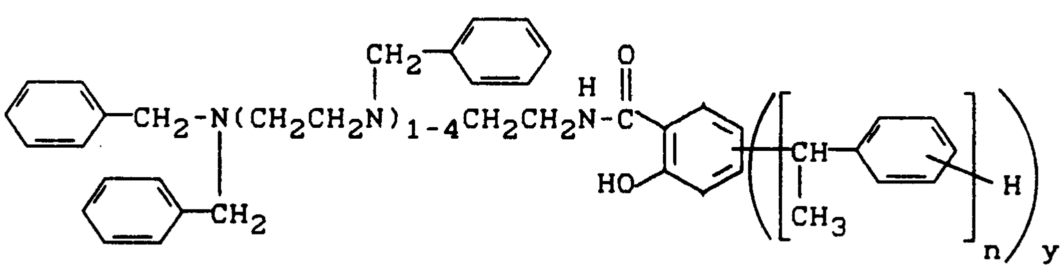

(IV)

$n \cdot y = 2$ bis 6

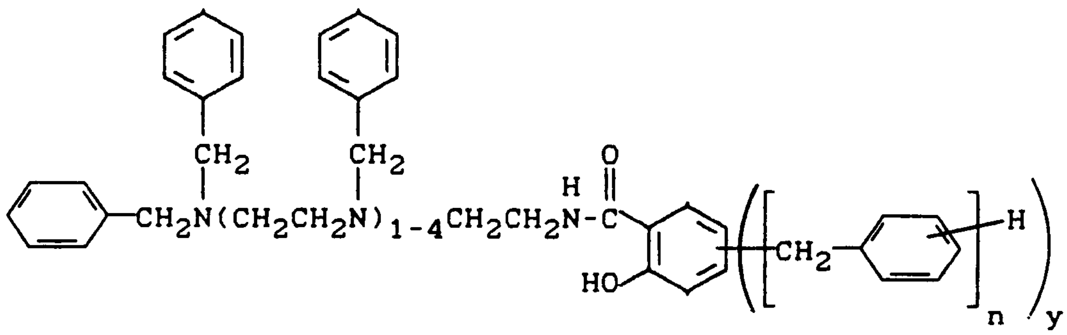

(V) n · y = 2 bis 6

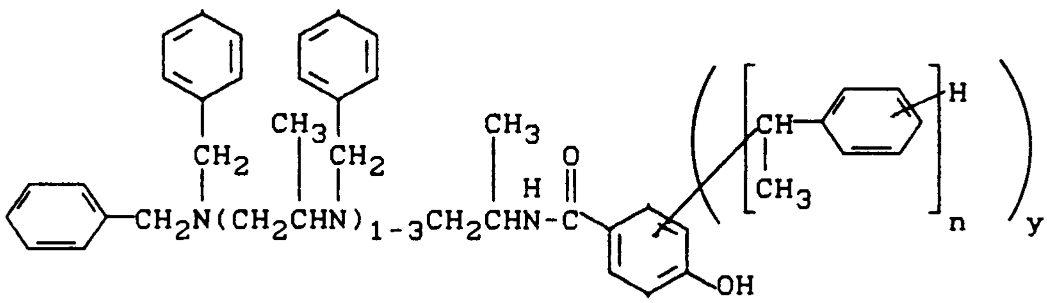

(VI) n · y = 2 bis 6

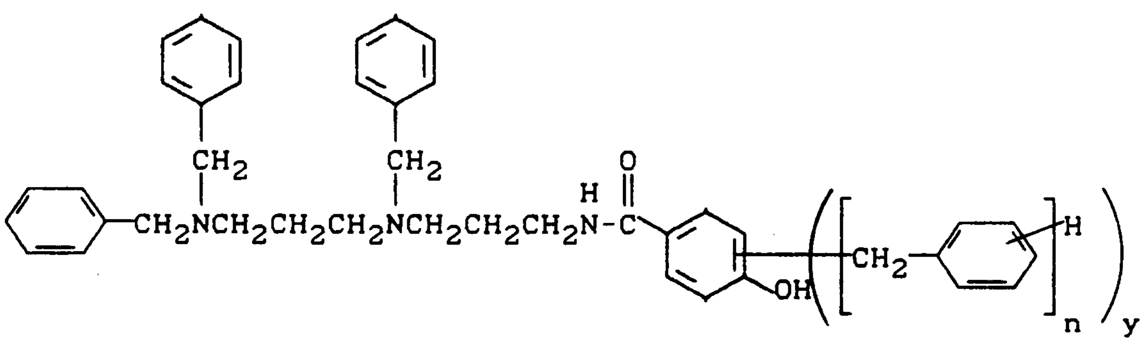

(VII) n · y = 2 bis 6

Die Erfindung betrifft ferner ein Verfahren zur Herstellung der neuen polyaralkylierten Hydroxybenzoesäureamiden der Formel (I).

Das Verfahren ist dadurch gekennzeichnet ist, daß man aromatische Hydroxycarbonsäuren oder deren Ester der Formel

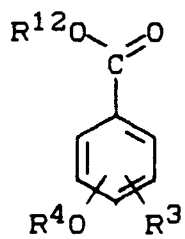

(VIII),

worin

$R^3$ und $R^4$ die unter Formel (I) angegebene Bedeutung haben und
$R^{12}$ Wasserstoff oder $C_1$-$C_4$-Alkyl bedeutet,
mit 1 bis 20, vorzugsweise 2 bis 10 Molen α-Alkenylbenzolen der Formel

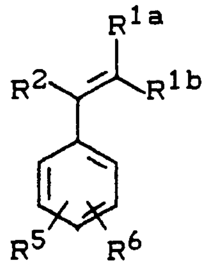

(IX) ,

in der
$R^{1a}$ und $R^{1b}$ Wasserstoff oder $C_1$-$C_3$-Alkyl bedeuten und
$R^2$, $R^5$ und $R^6$ die unter Formel (I) angegebene Bedeutung haben,
oder mit 1 bis 20, vorzugsweise 2 bis 10 Molen α-Halogenalkylbenzolen der Formel

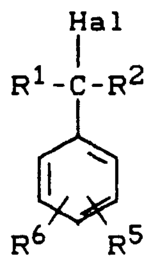

(X),

in der
Hal für Chlor oder Brom steht und
$R^1$, $R^2$, $R^5$ und $R^6$ die unter Formel (I) angegebene Bedeutung besitzen,
in Gegenwart von sauren Katalysatoren bei 50 bis 200 °C umsetzt und anschließend die erhaltenen aralkylierten Hydroxybenzoesäuren oder deren Ester mit Aminen der Formel

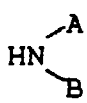

(XI),

in der
A und B die unter Formel (I) angegebene Bedeutung haben,
bei Temperaturen von 50 bis 250 °C weiter umsetzt.

Das erfindungsgemäße Verfahren sei durch folgende Formelschemen dargestellt:

1a)

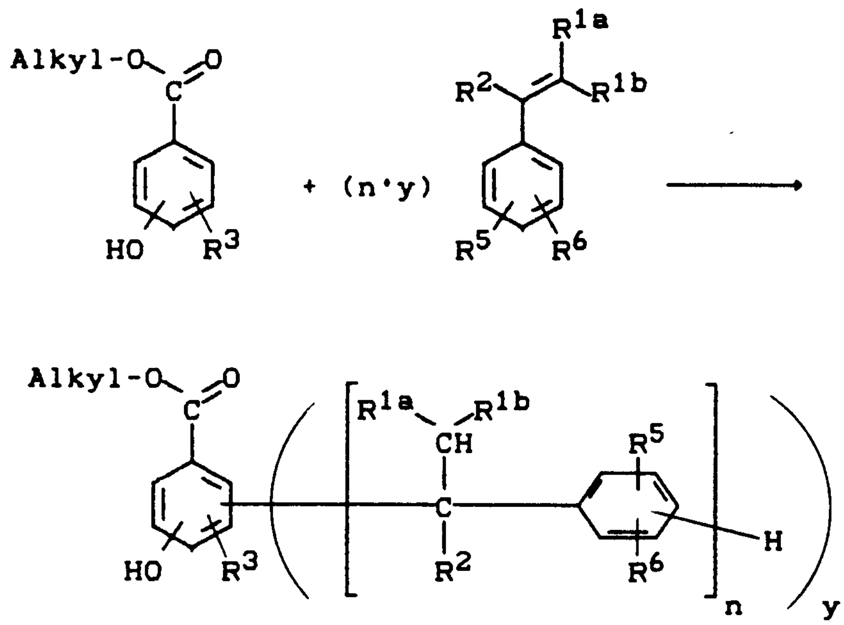


b)

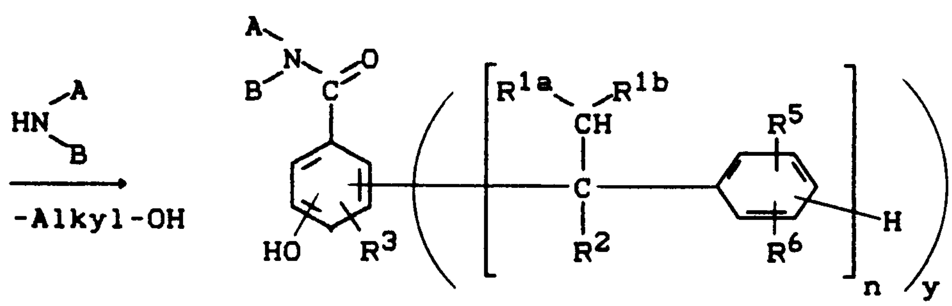

2a)

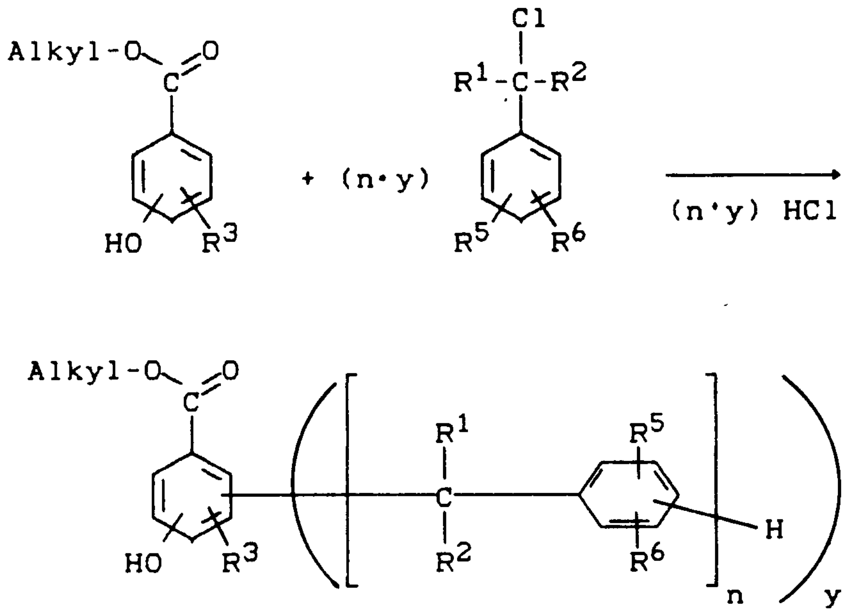


b)

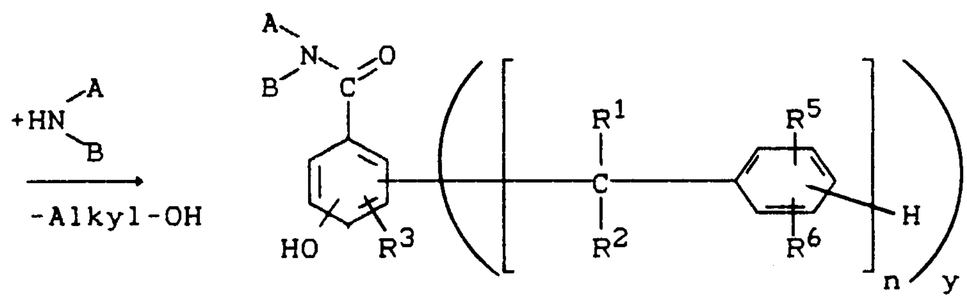


Als saure Katalysatoren kommen für das erfindungsgemäße Verfahren in Frage: Brönsted-Säuren wie Schwefelsäure, Phosphorsäure und/oder Salzsäure, sowie Lewis-Säuren wie Aluminiumtrichlorid, Zinkchlorid, Zinkstearat, Bortrifluorid und/oder Zinntetrachlorid. Bevorzugt werden als saure Katalysatoren eingesetzt: Schwefelsäure, Phosphorsäure, Aluminiumtrichlorid, Zinkchlorid und/oder Zinkstearat.

Die sauren Katalysatoren werden üblicherweise in Mengen von 0,0001 bis 0,3, bevorzugt 0,01 bis 0,1 Mol, bezogen auf 1 Mol aromatischer Hydroxycarbonsäure eingesetzt.

Erfindungsgemäß setzt man pro Mol Hydroxycarbonsäure oder deren Ester 1 bis 20, bevorzugt 2 bis 10, besonders bevorzugt 3 bis 8 Mole α-Alkenylbenzole der Formel (IX) oder α-Halogenalkylbenzole der Formel (X) ein.

Die Reaktionstemperaturen liegen bevorzugt bei 50 bis 180 °C.

Als aromatische Hydroxycarbonsäuren oder deren Ester seien genannt: Salicylsäure, p-Hydroxybenzoesäure, Methylsalicylsäure, tert.-Butylsalicylsäure, 3-Nonylsalicylsäure, 5-tert.-Octylsalicylsäure, 5-Chlorsalicylsäure und 2,4-Dihydroxybenzoesäure sowie deren Methyl-, Ethyl-, Propyl- und Butylester, bevorzugt p-Hydroxybenzoesäure und Salicylsäure sowie deren Methylester.

Als α-Alkenylbenzole der Formel (IX) werden beispielsweise genannt: Styrol, 4-Chlorstyrol, 3- und 4-Methylstyrol, 4-Hydroxystyrol und α-Methylstyrol. Bevorzugt sind Styrol, 4-Methylstyrol und α-Methylstyrol.

Als α-Halogenbenzole der Formel (X) kommen in Frage: Benzylbromid, Benzylchlorid, α-Chlorethylbenzol, α-Chlorisopropylbenzol, α-Chlorbutylbenzol, 3- und 4-Methylbenzylchlorid, 4-Methoxybenzylchlorid und 4-Chlorbenzylchlorid, bevorzugt Benzylchlorid.

Bei zusätzlichem Einsatz von z.B. Divinylbenzol oder von z.B. Xylylenchlorid in die erfindungsgemäße Reaktion erhält man bifunktionelle Vertreter wie Bis-(hydroxybenzoesäureamide) der Formel (I).

Als Amine der Formel (XI) können in das erfindungsgemäße Verfahren eingesetzt werden: aliphatische und aromatische Amine mit mindestens einer primären oder sekundären Aminogruppe, wie Ethylamin, Butylamin, Cyclohexylamin, Benzylamin, Stearylamin, Diethylamin, Dibenzylamin, Ethanolamin, Diethanolamin, Anilin, N-Methylanilin, Ethylendiamin, 1,2-oder 1,3-Propylendiamin, Di-1,2-propylentriamin, Di-1,3-propylentriamin, Tetramethylendiamin, Pentamethylendiamin, Hexamethylendiamin, Octamethylendiamin; Polyethylenpolyamine der Formel $H_2N-CH_2CH_2(NH-CH_2CH_2)_b-NH_2$, in der b eine ganze Zahl von 1 bis 50 bedeutet, wie Diethylentriamin, Triethylentetramin und Tetraethylenpentamin; Polyoxyethylendiamine, Polyoxypropylendiamine, 3-(2-Aminoethyl)aminopropylamin, 1,2-Bis-(3-aminopropylamino)ethan, N,N′-Bis-(3-aminopropyl)-1,4-diaminobutan, 4,7,10-Trioxatridecan-1,13-diamin; cycloaliphatische und heterocyclische Amine, wie 1,2-oder 1,3-Diaminocyclopentan, 1,2-, 1,3-oder 1,4-Diaminocyclohexan, 3,3′-, 3,4′- oder 4,4′-Diaminodicyclohexylmethan, 2,2-Bis-(4′-aminocyclohexyl)-propan, 4,4′-Diamino-3,3′-dimethyldicyclohexylmethan, 3-Aminomethyl-3,5,5-trimethylcyclohexylamin (Isophorondiamin), N-2-Aminoethyl, N,N′-Bis(3-aminopropyl)-piperazin, N,N′-Bis(2-aminoethyl)-piperazin, 1,3- und 1,4-Bis-(aminomethyl)-cyclohexan und 3(4)-,8(9)-Bis-(aminomethyl)tricyclo[5,2,1,$0^{2,6}$]decan, sowie deren partiell am N alkylierten Derivate.

Bevorzugt werden folgende Amine der Formel (XI) eingesetzt: Aminoethanol, Ethylendiamin, Propylendiamine, Diethylen- und Dipropylen-triamin, N-Methyl- und N-Cyclohexyl-dipropylentriamin, Triethylentetramin, Tetraethylenpentamin, Pentaethylenhexamin, Hexaethylenheptamin, N,N′-Bis-(aminopropyl)-ethylendiamin, N,N′-Bis-(aminoethyl)-propylendiamin, 3-Aminomethyl-3,5,5-trimethylcyclohexylamin (Isophorondiamin), N-2-Aminoethylpiperazin und N,N′-Bis-(2-aminoethyl)-piperazin.

Außer den Aminen auch Ammoniak eingesetzt werden.

Die Umsetzung der aralkylierten Hydroxybenzoesäuren oder deren Ester mit den Aminen kann in üblicher Weise durch Erhitzen der Komponenten auf 50 bis 250 °C, bevorzugt 80 bis 180 °C, unter Abdestillieren von Alkoholen erfolgen (vgl. Organikum, VEB Deutscher Verlag der Wissenschaften, Berlin 1967, Seite 394).

Die Amine der Formel (XI) können vor oder nach der erfindungsgemäßen Umsetzung mit Alkylhalogeniden, wie Methylchlorid und Butylchlorid, Aralkylchloriden, wie Benzylchlorid, Arylsulfonaten, wie Toluolsulfonsäuremethylester oder Alkylsulfaten, wie Dimethylsulfat, alkyliert (quaterniert) werden.

Die neuen polyaralkylierten Hydroxybenzoesäurenamide stellen ölige bis harzartige Produkte mit Erweichungspunkten bis ca. 130 °C dar. Die mittleren Molekulargewichte liegen bei etwa 300 bis 5000 (bestimmt nach Gelpermeationschromatographie (GPC)).

Die Erfindung betrifft ferner die Verwendung dieser neuen polyaralkylierten Hydroxybenzoesäureamide als Korrosionsinhibitoren. Diese können beispielsweise als Korrosionsschutzmittel in Reinigungs-, Wärmeüberträger-und Hydraulikflüssigkeiten, in Brennstoffen, Metallbearbeitungsölen und in Bohr- und Spülflüssigkeiten von Ölbohranlagen eingesetzt werden. Sie bewirken in diesen Flüssigkeiten eine starke Herabsetzung der Korrosivität gegen Metalle. Die bevorzugte Verwendung der erfindungsgemäßen polyaralkylierten Hydroxybenzoesäureamide liegt jedoch in der Verwendung als Korrosionsschutzmittel in Säuren, wie sie bei der Erdölförderung speziell bei der Säurebehandlung von Bohrlöchern angewendet werden. Es wurde gefunden, daß die erfindungsgemäßen polyaralkylierten Hydroxybenzoesäureamide die Korrosivität der für die Bohrungen verwendeten Säuren gegenüber Eisen und Eisenlegierungen wesentlich stärker herabsetzten als die bislang in Säuren verwendeten, in der JA-A-74/10579 beschriebenen Reaktionsprodukte von Benzylchlorid und Imidazolin-Derivaten.

Es wurde gefunden, daß die erfindungsgemäßen polyaralkylierten Benzoesäureamide besondere wirksame Korrosionsschutzmittel für Eisen und Eisenlegierungen, wie Stahl, aber auch für Kupfer, Kupferlegierungen wie Messing, ferner für Zink, Blei und Aluminium sind. Bevorzugt werden sie als Korrosionsschutzmittel für Eisen und Eisenlegierungen eingesetzt.

Die erfindungsgemäß als Korrosionsinhibitoren zu verwendenden polyaralkylierten Hydroxybenzoesäureamide können allein oder in Kombination mit anderen bekannten Korrosionsinhibitoren eingesetzt werden, z.B. mit quartären Ammoniumsalzen und/oder Imidazolinen; besonders bewährt haben sich Kombinationen mit Acetylenalkoholen, wie Propargylalkohol, Hexinol, 2-Ethylhexinol, Butin-1-ol-3 und/oder 2-Methyl-butin-3-ol-2, weil sich in diesen Kombinationen die korrosionsinhibierenden Wirkungen der einzelnen Komponenten synergistisch verstärken.

Die Menge, in der die erfindungsgemäßen Korrosionsinhibitoren oder deren Kombination mit anderen Korrosionsinhibitoren eingesetzt werden, hängt ab von der Art des korrosiv wirkenden Mediums, den am Ort der Anwendung herrschenden Bedingungen und den tolerierbaren Korrosionsraten. In der Regel setzt man die erfindungsgemäßen polyaralkylierten Hydroxybenzoesäureamide der Formel (I) in den Flüssigkeiten, deren Korrosivität herabgesetzt werden soll, in einer Menge von etwa 100 bis 20 000 ppm, bevorzugt 500 bis 4000 ppm ein. Zur Herabsetzung der Korrosivität schwacher Säuren, wie Kohlendioxid oder Schwefelwasserstoff, sind Mengen von etwa 5 bis 200 ppm ausreichend.

Die erfindungsgemäßen polyaralkylierten Hydroxybenzoesäureamide der Formel (I) werden vorzugsweise in formulierter Form, d.h. in Kombination mit üblichen Formulierungshilfsmitteln eingesetzt. Solche Formulierungen enthalten außer den erfindungsgemäßen Korrosionsinhibitoren gegebenenfalls noch andere Inhibitoren und Tenside und Lösungsmittel. Geeignete Tenside sind ethoxylierte Derivate von mindestens 8 Kohlenstoffatomen aufweisenden, aliphatischen oder araliphatischen Alkoholen oder Aminen, wie 2-Ethylhexanol, Laurylalkohol, Cetylalkohol, Dodecylamin, Talgfettamin und/oder Nonylphenol. Geeignete Lösungsmittel sind solche die mit Wasser und Säuren mischbar sind, wie niedere Alkohole, Mono- und Oligoethylenglykol, niedere Ketone, Formamid, Dimethylformamid und/oder N-Methylpyrrolidon. Bevorzugt sind: Isopropanol, Formamid, Dimethylformamid und N-Methylpyrrolidon.

## Herstellungsbeispiele

### Beispiel 1

Eine Mischung von 304 g (2 Mol) Salicylsäuremethylester und 28 g konzentrierter Schwefelsäure wird bei 60 °C mit 833 g (8 Mol) Styrol versetzt. Nach 1 h setzt man 206 g (2 Mol) Diethylentriamin hinzu und destilliert 64 g Methanol ab (Innentemperatur 160 bis 180 °C). Darauf gibt man bei 140 °C 1012 g (8 Mol) Benzylchlorid hinzu, rührt 2 h bei 150 °C und setzt mit 1600 g 20 %iger Natronlauge durch 2-stündiges Erhitzen auf 100 °C um. Nach dem Phasentrennen und Abdestillieren restlichen Wassers resultieren 1950 g hochviskosen Harzes.

Elementaranalyse: C 80, H 7,6, N 3,9 %
N (basisch): 2,76 %
OH-Zahl: 32

### Beispiel 2

Ersetzt man in Beispiel 1 Salicylsäureester durch 304 g p-Hydroxybenzoesäuremethylester, so erhält man ca. 2050 g eines hochviskosen Harzes.

N (basisch): 2,83 %
OH-Zahl: 32

### Beispiel 3

Verwendet man in Beispiel 1 1250 g (12 Mol) Styrol, so erhält man ca. 2400 g eines zähen Harzes.

N (basisch): 2,54 %
OH-Zahl: 22

### Beispiel 4

Verfährt man wie in Beispiel 2, setzt aber nicht mit Benzylchlorid und Natronlauge um, so erhält man 1280 g eines zähen Harzes.

N (basisch): 4,31 %
OH-Zahl: 64

### Beispiel 5

In 304 g (2 Mol) Salicylsäuremethylester und 0,5 g Zn-Stearat tropft man innerhalb 2 h 1012,8 g (8 Mol) Benzylchlorid ein. Die kräftige Abspaltung von Chlorwasserstoffgas wird anschließend durch Einleiten von trockenem Stickstoff (-2 h 130 °C) komplettiert. Man erhält 1015 g (99 %) eines hellbräunlichen, viskosen Öles. $C_{36}H_{32}O_3$ (512,7)

| | | | |
|---|---|---|---|
| Ber.: | C 84,35 | H 6,29 | N 9,36 |
| Gef.: | 84,54 | 6,30 | 9,18 |

Beispiel 6

Nach der Verfahrensweise gemäß Beispiel 5 erhält man bei Verwendung von 506,4 g (4 Mol) Benzylchlorid 645 g (97 %) eines hellorange gefärbten, viskosen Öles. $C_{22}H_{20}O_3$

| | | | |
|---|---|---|---|
| Ber.: | C 79,49 % | H 6,07 % | O 14,44 % |
| Gef.: | 79,68 | 6,17 | 14,28 |

Beispiel 7

Nach der Verfahrensweise gemäß Beispiel 5 erhält man bei Einsatz von 759,6 g (6 Mol) Benzylchlorid 830 g (98,2 %) eines klebrigen, wiskosen Harzes. $C_{29}H_{26}O_3$ (422,5)

| | | | |
|---|---|---|---|
| Ber.: | C 82,44 % | H 6,20 % | O 11,36 % |
| Gef.: | 82,60 | 6,13 | 11,20 |

Beispiel 8

256,4 g (0,5 Mol) Öl aus Beispiel 5 werden zusammen mit 51,6 g (0,5 Mol) Diethylentriamin aufgeheizt, wobei >100 °C die Abspaltung von Methanol einsetzt. Man hält ca. 1,5 h bei 150 °C, zum Schluß im Vakuum und erhält 290 g (99,3 %) eines hellorange gefärbten, klebrigen Harzes. $C_{39}H_{41}N_3O_2$ (583,8)

| | | | |
|---|---|---|---|
| Ber.: | C 80,24 % | H 7,08 % | N 7,20 % |
| Gef.: | 80,39 | 6,97 | 6,99 |

Beispiel 9

128,2 g (0,25 Mol) Öl gemäß Beispiel 5 werden zusammen mit 16,8 g (0,275 Mol) 2-Aminoethanol ca. 3 1/2 h auf 150 bis 170 °C erhitzt, wobei Methanol über Kopf abdestilliert wird. Nach Abziehen flüchtiger Komponenten im Vakuum bei 160 °C erhält man 134,8 g (99,5 %) eines gelb-organen Harzes. $C_{37}H_{35}NO_3$ - (541,7)

| | | | |
|---|---|---|---|
| Ber.: | C 82,04 % | H 6,51 % | N 2,59 % |
| Gef.: | 82,22 | 6,69 | 2,59 |

Beispiel 10

128,2 g (0,25 Mol) Öl aus Beispiel 5 werden zusammen mit 25,8 g (0,25 Mol) Diethylentriamin 2 h auf 130 bis 150 °C erhitzt, das sich bildende Methanol über Kopf abdestilliert. Die noch warme Schmelze verdünnt man mit 250 ml Toluol, läßt 101,4 g (0,8 Mol) Benzylchlorid bei Rückflußtemperatur einlaufen, hält 2 h unter Rühren, gibt 32 g (0,8 Mol) Ätznatron, gelöst in 100 ml Wasser, zu und rührt weitere 1 1/2 h bei Siedetemperatur nach. Nach Abtrennen der organischen Phase, Waschen mit Waser und Einengen, zum Schluß im Vakuum bei 180 °C werden 211,5 g (99 % der Theorie) eines braunen, viskosen Harzes gewonnen. $C_{60}H_{59}N_3O_2$ (854,2)

| | | | |
|---|---|---|---|
| Ber.: | C 84,37 % | H 6,96 % | N 4,92 % |
| Gef.: | 84,55 | 6,80 | 4,75 |

Beispiel 11

Analog Beispiel 10 werden anstelle des Öles aus Beispiel 5 83,1 g Öl gemäß Beispiel 6 verwendet. Es werden 167,8 g (99,6 %) eines orange-braunen, viskosen Harzes gewonnen. $C_{46}H_{47}N_3O_2$ (673,9)

| | | | |
|---|---|---|---|
| Ber.: | C 81,99 % | H 7,03 % | N 6,24 % |
| Gef.: | 82,18 | 7,03 | 6,05 |

Beispiel 12

Analog Beispiel 10 liefert der Einsatz von 105,6 g (0,25 Mol) des Harzes gemäß Beispiel 7 anstelle des Öls aus Beispiel 5 190,3 g (99,6 %) eines rötlichbraunen, zähen Harzes. $C_{53}H_{53}N_3O_2$ (764,03)

| | | | |
|---|---|---|---|
| Ber.: | C 83,32 % | H 6,99 % | N 5,50 % |
| Gef.: | 83,58 | 6,98 | 5,29 |

Beispiel 13

Nach der Verfahrensweise von Beispiel 5 erhält man bei Verwendung von 304 g (2 Mol) p-Hydroxybenzoesäuremethylester anstelle des Salicylsäureesters 1012 g (98,7 %) eines hellbraunen, viskosen Harzes. $C_{36}H_{32}O_3$ (512,7)

| | | | |
|---|---|---|---|
| Ber.: | C 84,35 % | H 6,29 % | O 9,36 % |
| Gef.: | 84,40 | 6,30 | 9,45 |

Beispiel 14

Setzt man analog Beispiel 10 anstelle des Öls aus Beispiel 5 die gleiche Menge des Harzes gemäß Beispiel 13 ein, so gewinnt man 203 g (95,1 %) eines braunen, viskosen Harzes. $C_{60}H_{59}N_3O_2$ (854,2)

| | | | |
|---|---|---|---|
| Ber.: | C 84,37 % | H 6,96 % | N 4,92 % |
| Gef.: | 84,65 | 6,86 | 4,74 |

Beispiel 15

(Prüfung der korrosionsinhibierenden Wirkung der neuen polyaralkylierten Hydroxybenzoesäureamide in Salzsäure)

Die Versuche wurden die folgt durchgeführt:
Aus den zu prüfenden Korrosionsinhibitoren (den erfindungsgemäßen polyaralkylierten Hydroxybenzoesäureamiden oder deren Gemischen mit Acetylenalkoholen) wurden zunächst durch Vermischen mit 10 Gew.-% Tensid (einem mit 30 Mol Ethylenoxid umgesetzten Laurylsulfat) und Verdünnen der so erhaltenen Mischungen mit Dimethylformamid auf 40 Gew.-% Korrosionsinhibitor enthaltende Lösungen, in wäßriger Chlorwasserstoffsäure leicht lösliche bzw. leicht dispergierbare Formulierungen hergestellt.

Diese Lösungen (Formulierungen) wurden den wäßrigen Salzsäurelösungen, in denen die korrosionsinhibierende Wirkung geprüft werden sollte, zugesetzt. In die mit Korrosionsinhibitor versetzte wäßrige Salzsäure wurde ein entfetteter Stahlcoupon gegeben. Nach 6-stündiger Einwirkung der wäßrigen Salzsäure auf diesen Coupon wurde dessen Gewichtsverlust bestimmt und in eine Oberflächenabtragsgeschwindigkeit umgerechnet. Die Korrosionsversuche bei Temperaturen >90° wurden in Autoklaven durchgeführt, die noch zusätzlich mit 20 bar Stickstoff beaufschlagt waren.

Die Stahlcoupons waren aus den Stahlsorten K 50 und N 80 gefertigt, d.h. aus kohlenstoffarmen Stählen (mild steels), wie sie für Verrohrungen in Ölfeldern eingesetzt werden.

In der nachstehenden Tabelle sind die verwendeten Korrosionsinhibitoren, die Mengen [ppm], in denen sie eingesetzt wurden, die Temperaturen, bei denen die Korrosionsversuche durchgeführt wurden, die Stärke der für die Korrosionsversuche verwendeten wäßrigen Salzsäure, die Stahlsorte, aus der die Testcoupons gefertigt waren und die Oberflächenabtragsgeschwindigkeit (als Maß für die korrosionsinhibierende Wirkung) zusammengestellt.

| Verbindung gemäß (ppm) | Acetylenalkohol (ppm) | Temp. (°C) | Säurestärke (%) | Stahlsorte | Oberflächenabtraggeschwindigkeit (µm/h) |
|---|---|---|---|---|---|
| Beispiel 1 (400) | - | 90 | 15 | K 50 | 0,12 |
| Beispiel 1 (1000) | - | 90 | 15 | K 50 | 0,08 |
| Beispiel 1 (1170) | - | 70 | 15 | K 50 | 0,058 |
| Beispiel 1 (100) | Propargylalkohol (20) | 90 | 15 | K 50 | 0,09 |
| Beispi (200) | Propargylalkohol (40) | 90 | 15 | K 50 | 0,07 |
| Beispiel 1 (1000) | Propargylalkohol (200) | 90 | 15 | K 50 | 0,04 |
| Beispiel 1 (400) | Ethyloctinol (80) | 90 | 15 | K 50 | 0,052 |
| Beispiel 1 (490) | Ethyloctinol (50) | 90 | 15 | K 50 | 0,060 |
| Beispiel 1 (580) | Ethyloctinol (20) | 90 | 15 | K 50 | 0,078 |

| Verbindung gemäß (ppm) | Acetylenalkohol (ppm) | Temp. (°C) | Säurestärke (%) | Stahlsorte | Oberflächenabtraggeschwindigkeit (µm/h) |
|---|---|---|---|---|---|
| Beispiel 1 (670) | Propargylalkohol (500) | 70 | 15 | K 50 | 0,045 |
| Beispiel 1 (670) | Propargylalkohol (500) | 70 | 30 | K 50 | 0,06 |
| Beispiel 1 (670) | Propargylalkohol (500) | 70 | 15 | N 80 | 0,056 |
| Beispiel 1 (670) | Propargylalkohol (500) | 70 | 30 | N 80 | 0,142 |
| Beispiel 1 (670) | Propargylalkohol (500) | 90 | 30 | K 50 | 0,069 |
| Beispiel 1 (670) | Propargylalkohol (500) | 120 | 15 | N 80 | 4,2 |
| Beispiel 2 (670) | Propargylalkohol (500) | 70 | 15 | K 50 | 0,043 |
| Beispiel 2 (670) | Propargylalkohol (500) | 70 | 30 | K 50 | 0,079 |
| Beispiel 3 (670) | Propargylalkohol (500) | 70 | 15 | K 50 | 0,04 |
| Beispiel 3 (670) | Propargylalkohol (500) | 70 | 30 | K 50 | 0,11 |
| Beispiel 4 (670) | Propargylalkohol (500) | 70 | 15 | K 50 | 0,12 |
| Beispiel 4 (670) | Propargylalkohol (500) | 70 | 30 | K 50 | 2,24 |

| Verbindung gemäß (ppm) | Acetylenalkohol (ppm) | Temp. (°C) | Säure-stärke (%) | Stahlsorte | Oberflächenabtrag-geschwindigkeit (µm/h) |
|---|---|---|---|---|---|
| Beispiel 8 (670) | Propargylalkohol (500) | 70 | 15 | K 50 | 0,045 |
| Beispiel 10 (670) | Propargylalkohol (500) | 70 | 15 | K 50 | 0,047 |
| Beispiel 10 (670) | Propargylalkohol (500) | 70 | 30 | K 50 | 0,282 |
| Beispiel 11 (670) | Propargylalkohol (500) | 70 | 15 | K 50 | 0,042 |
| Beispiel 11 (670) | Propargylalkohol (500) | 70 | 30 | K 50 | 0,070 |
| Beispiel 12 (670) | Propargylalkohol (500) | 70 | 15 | K 50 | 0,042 |
| Beispiel 12 (670) | Propargylalkohol (500) | 70 | 30 | K 50 | 0,072 |
| Beispiel 14 (670) | Propargylalkohol (500) | 70 | 15 | K 50 | 0,041 |
| Beispiel 14 (670) | Propargylalkohol (500) | 70 | 30 | K 50 | 0,227 |

Prüfung der korrosionsinhibierenden Wirkung von neuen polyaralkylierten Hydroxybenzoesäureamiden gegen $CO_2$ und $H_2S$

Beispiel 16

Die Prüfung wird nach Art des sogenannten Wheeltests durchgeführt. Eine 1:1 Mischung aus Petroleum und künstlichem Meerwasser wird 30 Min. unter Sauerstoffausschluß mit $CO_2$ oder einer 1:1 Mischung aus $CO_2$ und $H_2S$ begast. Der Korrosionsinhibitor und der entfettete Stahlcoupon werden zur Mischung gegeben, das Testgefäß sorgfältig verschlossen und auf einem rotierenden Rad 7 Tage bei 80 °C bewegt. Anschließend werden die Coupons gereinigt und ihr Gewichtsverlust bestimmt. Durch Vergleich mit einem Blindwert wird der Protektionsfaktor bestimmt. Es werden folgende Werte erhalten:

| Verbindung Konzentration (ppm) | Korrosives Agens | Protektionsfaktor (%) |
|---|---|---|
| Beispiel 4 (20) | $CO_2$ | 67 |
| Beispiel 4 (50) | $CO_2/H_2S$ | 48 |
| Beispiel 9 (10) | $CO_2$ | 50 |

Aus den Beispielen ist zu ersehen, daß die erfindungsgemäßen Verbindungen wirksame Inhibitoren sowohl gegen starke Mineralsäuren als auch gegen schwach saure Medien sind.

Besonders bemerkenswert ist die sehr gute Schutzwirkung in 30 %iger Salzsäure.

**Patentansprüche**

**1.** Polyaralkylierte Hydroxybenzoesäureamide der Formel

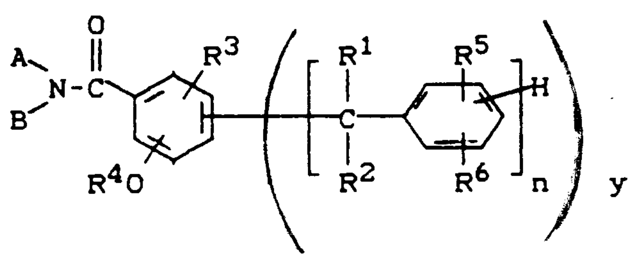

,

in der

| | |
|---|---|
| n | für eine ganze Zahl von 1 bis 10 und |
| y | für eine ganze Zahl von 1 bis 3 stehen, mit der Maßgabe, daß das Produkt n • y höchstens den Wert 20 annimmt, |
| $R^1$ und $R^2$ | unabhängig voneinander Wasserstoff oder $C_1$-$C_4$-Alkyl bedeuten, |
| $R^3$ | für Wasserstoff, Hydroxy, O-$C_1$-$C_{18}$-Alkyl, $C_1$-$C_{18}$-Alkyl, $C_1$-$C_{18}$-Alkoxycarbonyl, Halogen, die Carboxyl-, Carbonamid-, Sulfo-, Sulfonat- oder Aminogruppe steht, |
| $R^4$ | Wasserstoff, $C_1$-$C_{18}$-Alkyl, $C_7$-$C_{18}$-Aralkyl oder $C_1$-$C_{18}$-Alkylcarbonyl bedeutet, |
| $R^5$ und $R^6$ | unabhängig voneinander für Wasserstoff, Hydroxy, Halogen oder $C_1$-$C_{18}$-Alkyl steht, |
| A und B | gleich oder verschieden sind und Wasserstoff, $C_1$-$C_{18}$-Alkyl, $C_7$-$C_{18}$-Aralkyl, $C_6$-$C_{15}$-Aryl, $C_1$-$C_{18}$-Alkoxycarbonyl bedeuten oder für eine Gruppe der Formel |

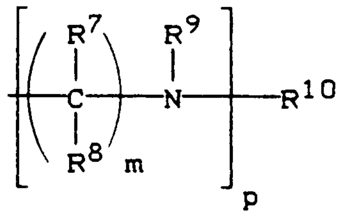 oder 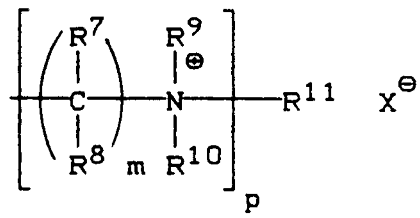

stehen, in denen
$R^7$ bis $R^{11}$ unabhängig voneinander Wasserstoff, $C_1$-$C_{18}$-Alkyl, $C_7$-$C_{18}$-Aralkyl oder $C_6$-$C_{15}$-Aryl bedeuten,
$X^{\ominus}$ ein Anion, vorzugsweise ein Halogenid-, ein Alkylsulfat- oder ein Arylsulfonat-Ion,
m eine Zahl von 2 bis 8 und
p eine Zahl von 1 bis 50
bedeuten.

**2.** Verfahren zur Herstellung von neuen polyaralkylierten Hydroxybenzoesäureamiden der Formel

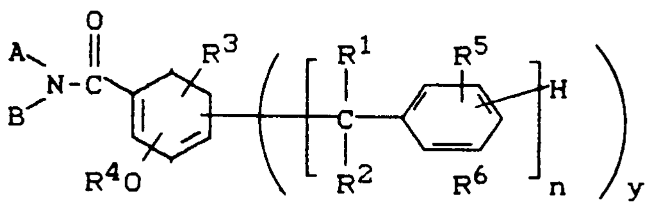 ,

in der

| | |
|---|---|
| n | für eine ganze Zahl von 1 bis 10 und |
| y | für eine ganze Zahl von 1 bis 3 stehen, mit der Maßgabe, daß das Produkt n • y höchstens den Wert 20, vorzugsweise einen Wert von 2 bis 10, besonders bevorzugt einen Wert von 3 bis 8 annimmt, |
| $R^1$ und $R^2$ | unabhängig voneinander Wasserstoff oder $C_1$-$C_4$-Alkyl bedeuten, |
| $R^3$ | für Wasserstoff, Hydroxy, O-$C_1$-$C_{18}$-Alkyl, $C_1$-$C_{18}$-Alkyl, $C_1$-$C_{18}$-Alkylcarbonyl, Halogen, die Carboxyl-, Carbonamid-, Sulfo-, Sulfonat- oder Aminogruppe steht, |
| $R^4$ | Wasserstoff, $C_1$-$C_{18}$-Alkyl, $C_7$-$C_{18}$-Aralkyl oder $C_1$-$C_{18}$-Alkylcarbonyl bedeutet, |
| $R^5$ und $R^6$ | unabhängig voneinander für Wasserstoff, Hydroxy, Halogen oder $C_1$-$C_{18}$-Alkyl steht, |
| A und B | gleich oder verschieden sind und Wasserstoff, $C_1$-$C_{18}$-Alkyl, $C_7$-$C_{18}$-Aralkyl, $C_6$-$C_{15}$-Aryl, $C_1$-$C_{18}$-Alkylcarbonyl bedeuten oder für eine Gruppe der Formel |

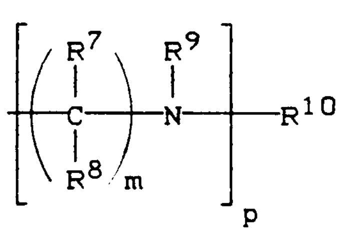 oder 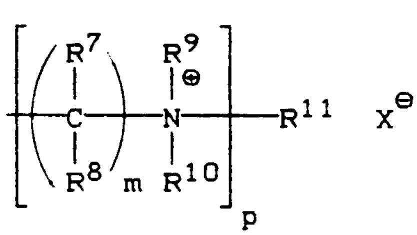

stehen, worin
$R^7$ und $R^{11}$ unabhängig voneinander Wasserstoff, $C_1$-$C_{18}$-Alkyl, $C_7$-$C_{18}$-Aralkyl, $C_6$-$C_{15}$-Aryl bedeuten,
$X^{\ominus}$ ein Anion darstellt,
m eine Zahl von 2 bis 8 und
p eine Zahl von 1 bis 50 bedeuten,

dadurch gekennzeichnet, daß man aromatische Hydroxycarbonsäuren oder deren Ester der Formel

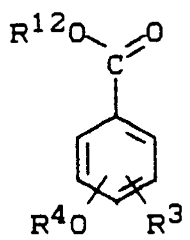

,

worin
$R^3$ und $R^4$ die obengenannte Bedeutung haben und
$R^{12}$ Wasserstoff oder $C_1$-$C_4$-Alkyl bedeutet,
mit 1 bis 20 Molen α-Alkenylbenzolen der Formel

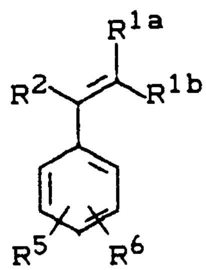

,

worin
$R^{1a}$ and $R^{1b}$ oder $C_1$-$C_3$-Alkyl bedeuten,
$R^2$, $R^5$ und $R^6$ die obengenannte Bedeutung haben,
oder mit 1 bis 20 Molen α-Halogenalkylbenzolen der Formel

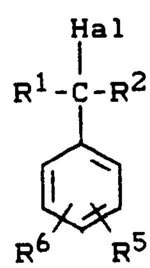

,

worin
Hal für Chlor oder Brom steht und
$R^1$, $R^2$, $R^5$ und $R^6$ die obengenannte Bedeutung besitzen,
in Gegenwart von sauren Katalysatoren bei 50 bis 200 °C umsetzt und anschließend die erhaltenen aralkylierten Hydroxybenzoesäuren oder deren Ester mit Aminen der Formel

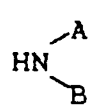

,

worin
A und B die obengenannte Bedeutung haben,

bei Temperaturen von 50 bis 250 ° C weiter umsetzt.

**3.** Verwendung der polyaralkylierten Hydroxybenzoesäureamide gemäß Anspruch 1 als Korrosionsinhibitoren.

## Claims

**1.** Polyaralkylated hydroxybenzamides of the formula

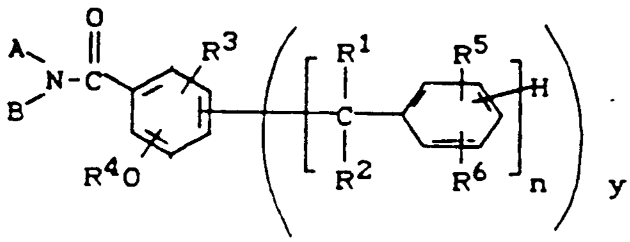

in which

| | |
|---|---|
| n | represents an integer from 1 to 10 and |
| y | represents an integer from 1 to 3, with the proviso that the product n • y has a maximum value of 20, |
| $R^1$ and $R^2$ | independently of each other denote hydrogen or $C_1$-$C_4$-alkyl, |
| $R^3$ | represents hydrogen, hydroxyl, O-$C_1$-$C_{18}$-alkyl, $C_1$-$C_{18}$-alkyl, $C_1$-$C_{18}$-alkoxycarbonyl, halogen, a carboxyl, carboxamide, sulpho, sulphonate or amino group, |
| $R^4$ | denotes hydrogen, $C_1$-$C_{18}$-alkyl, $c_7$-$c_{18}$-aralkyl or $C_1$-$C_{18}$-alkylcarbonyl, |
| $R^5$ and $R^6$ | independently of each other represent hydrogen, hydroxyl, halogen or $C_1$-$C_{18}$-alkyl, |
| A and B | are identical or different and denote hydrogen, $C_1$-$C_{18}$-alkyl, $C_7$-$C_{18}$-aralkyl, $C_6$-$C_{15}$-aryl, $C_1$-$C_{18}$-alkoxylcarbonyl or represent a group of the formula |

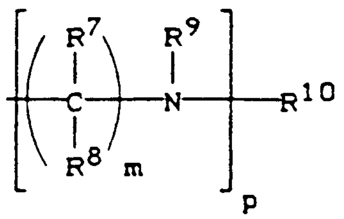

or

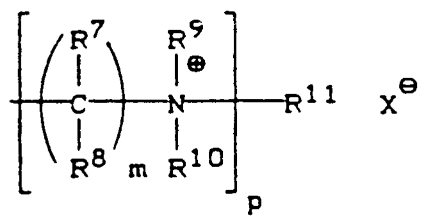

in which
$R^7$ to $R^{11}$ independently of each other denote hydrogen, $C_1$-$C_{18}$-alkyl, $C_7$-$C_{18}$-aralkyl or $C_6$-$C_{15}$-aryl,
$X^{\ominus}$ denotes an anion, preferably a halide, alkylsulphate or arylsulphonate ion,
m denotes a number from 2 to 8 and
p denotes a number from 1 to 50.

**2.** Process for the preparation of new polyaralkylated hydroxybenzamides of the formula

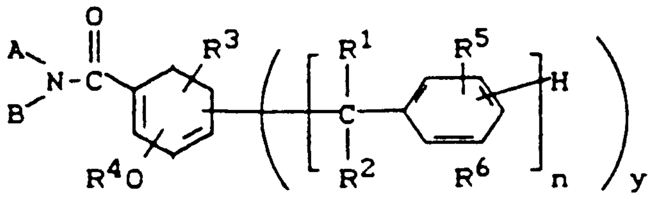

in which

| | |
|---|---|
| n | represents an integer from 1 to 10 and |
| y | represents an integer from 1 to 3, with the proviso that the product n • y has a maximum value of 20, preferably a value of 2 to 10, particularly preferably a value of 3 to 8, |
| $R^1$ and $R^2$ | independently of each other denote hydrogen or $C_1$-$C_4$-alkyl, |
| $R^3$ | represents hydrogen, hydroxyl, O-$C_1$-$C_{18}$-alkyl, $C_1$-$C_{18}$-alkyl, $C_1$-$C_{18}$-alkoxycarbonyl, halogen, a carboxyl, carboxamide, sulpho, sulphonate or amino group, |
| $R^4$ | denotes hydrogen, $C_1$-$C_{18}$-alkyl, $C_7$-$C_{18}$-aralkyl or $C_1$-$C_{18}$-alkylcarbonyl, |
| $R^5$ and $R^6$ | independently of each other represent hydrogen, hydroxyl, halogen or $C_1$-$C_{18}$-alkyl, |
| A and B | are identical or different and denote hydrogen, $C_1$-$C_{18}$-alkyl, $C_7$-$C_{18}$-aralkyl, $c_6$-$C_{15}$-aryl, $C_1$-$C_{18}$-alkylcarbonyl or represent a group of the formula |

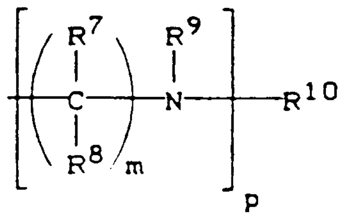

or

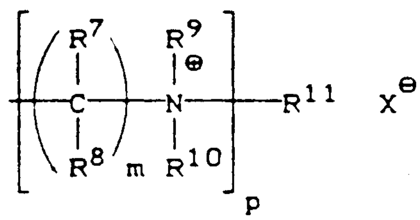

in which
$R^7$ to $R^{11}$ independently of each other denote hydrogen, $C_1$-$C_{18}$-alkyl, $C_7$-$C_{18}$-aralkyl or $C_6$-$C_{15}$-aryl,
$X^\ominus$ represents an anion,
m denotes a number from 2 to 8 and
p denotes a number from 1 to 50,

characterized in that aromatic hydroxycarboxylic acids or esters thereof of the formula

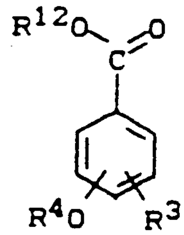

in which

| | |
|---|---|
| $R^3$ and $R^4$ | have the abovementioned meaning and |
| $R^{12}$ | denotes hydrogen or $C_1$-$C_4$-alkyl, |

are reacted with 1 to 20 mol of α-alkenylbenzenes of the formula

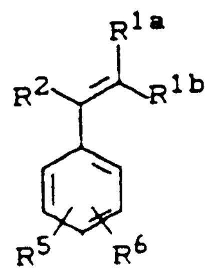

in which
$R^{1a}$ and $R^{1b}$ denote hydrogen or $C_1$-$C_3$-alkyl and
$R^2$, $R^5$ and $R^6$ have the abovementioned meaning,
or with 1 to 20 mol of α-halogenoalkylbenzenes of the formula

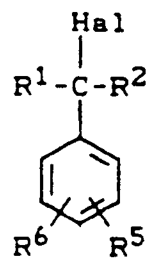

in which
Hal represents chlorine or bromine and
$R^1$, $R^2$, $R^5$ and $R^6$ have the abovementioned meaning,
in the presence of acidic catalysts at 50 to 200 °C, and the aralkylated hydroxybenzoic acids or esters thereof obtained are then further reacted with amines of the formula

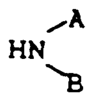

in which
A and B have the abovementioned meaning,
at temperatures of 50 to 250 °C.

**3.** Use of the new polyaralkyalated hydroxybenzamides according to Claim 1 as corrosion inhibitors.

## Revendications

**1.** Hydroxybenzamides polyaralkylés de formule

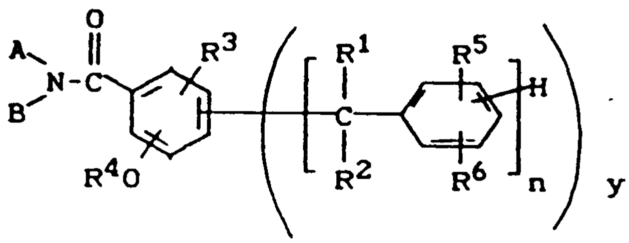

,

dans laquelle

| | |
|---|---|
| n | est un nombre entier de 1 à 10 et |
| y | est un nombre entier de 1 à 3, sous réserve que le produit n • y prenne au maximum la valeur 20, |
| $R^1$ et $R^2$ | représentent, indépendamment l'un de l'autre, l'hydrogène ou un groupe alkyle en $C_1$ à $C_4$, |
| $R^3$ | est l'hydrogène, un groupe hydroxy, O-(alkyle en $C_1$ à $C_{18}$, alkyle en $C_1$ à $C_{18}$, (alkoxy en $C_1$ à $C_{18}$)carbonyle, un halogène, le groupe carboxyle, carboxamido, sulfo, sulfonate ou amino, |
| $R^4$ | est l'hydrogène, un groupe alkyle en $C_1$ à $C_{18}$, aralkyle en $C_7$ à $C_{18}$ ou (alkyle en $C_1$ à $C_{18}$)-carbonyle, |
| $R^5$ et $R^6$ | représentent, indépendamment l'un de l'autre, l'hydrogène, un groupe hydroxy, un halogène ou un groupe alkyle en $C_1$ à $C_{18}$, |
| A et B, | identiques ou différents, représentent l'hydrogène, un groupe alkyle en $C_1$ à $C_{18}$, aralkyle en $C_7$ à $C_{18}$, aryle en $C_6$ à $C_{15}$, (alkoxy en $C_1$ à $C_{18}$)-carbonyle ou un groupe de formule |

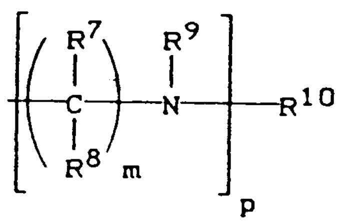

ou

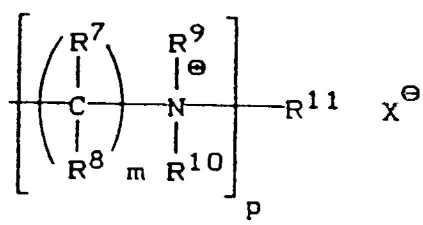

dans laquelle

| | |
|---|---|
| $R^7$ à $R^{11}$ | représentent, indépendamment les uns des autres, l'hydrogène, un groupe alkyle en $C_1$ à $C_{18}$, aralkyle en $C_7$ à $C_{18}$ ou aryle en $C_6$ à $C_{15}$, |
| $X^{\ominus}$ | représente un anion, de préférence un ion halogénure, alkylsulfate ou arylsulfonate, |
| m | est un nombre de 2 à 8 et |
| p | est un nombre de 1 à 50. |

**2.** Procédé de production d'hydroxybenzamides polyaralkylés nouveaux de formule

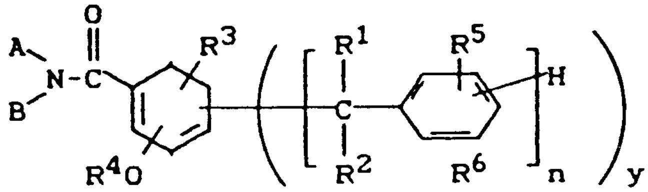

,

dans laquelle

| | |
|---|---|
| n | est un nombre entier de 1 à 10 et |

y est un nombre entier de 1 à 3, sous réserve que le produit n • y prenne au maximum la valeur 20, de préférence une valeur de 2 à 10, notamment une valeur de 3 à 8,

$R^1$ et $R^2$, indépendamment l'un de l'autre, représentent l'hydrogène ou un groupe alkyle en $C_1$ à $C_4$,

$R^3$ représente l'hydrogène, un groupe hydroxy, O-(alkyle en $C_1$ à $C_{18}$), alkyle en $C_1$ à $C_{18}$, (alkoxy en $C_1$ à $C_{18}$)-carbonyle, un halogène, le groupe carboxyle, carboxamido, sulfo, sulfonate ou amino,

$R^4$ est l'hydrogène, un groupe alkyle en $C_1$ à $C_{18}$, aralkyle en $C_7$ à $C_{18}$ ou (alkyle en $C_1$ à $C_{18}$)-carbonyle,

$R^5$ et $R^6$ représentent, indépendamment l'un de l'autre, l'hydrogène, un groupe hydroxy, un halogène ou un groupe alkyle en $C_1$ à $C_{18}$,

A et B, identiques ou différents, représentent l'hydrogène, un groupe alkyle en $C_1$ à $C_{18}$, aralkyle en $C_7$ à $C_{18}$, aryle en $C_6$ à $C_{15}$, (alkyle en $C_1$ à $C_{18}$)-carbonyle ou le groupe de formule

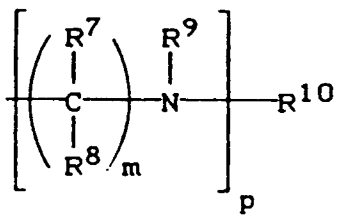

ou

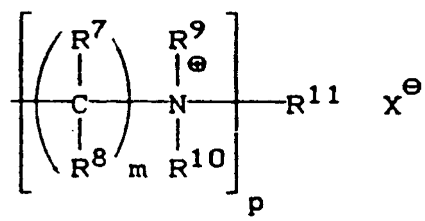

dans laquelle

$R^7$ à $R^{11}$, indépendamment les uns des autres, représentent l'hydrogène, un groupe alkyle en $C_1$ à $C_{18}$, aralkyle en $C_7$ à $C_{18}$, aryle en $C_6$ à $C_{15}$,

$X^\ominus$ représente un anion,

m est un nombre de 2 à 8 et

p est un nombre de 1 à 50,

caractérisé en ce qu'on fait réagir des acides hydroxycarboxyliques aromatiques ou leurs esters de formule

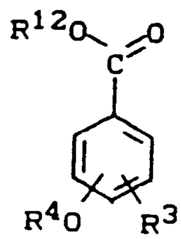

,

dans laquelle

$R^3$ et $R^4$ ont la définition indiquée ci-dessus et

$R^{12}$ est l'hydrogène ou un groupe alkyle en $C_1$ à $C_4$,

avec 1 à 20 moles d'α-alcénylbenzènes de formule

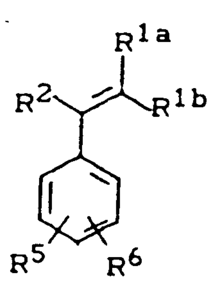

,

dans laquelle

$R^{1a}$ et $R^{1b}$ représentent l'hydrogène ou un groupe alkyle en $C_1$ à $C_3$,

$R^2$, $R^5$ et $R^6$ ont la définition indiquée ci-dessus,

ou avec 1 à 20 moles d'α-halogénalkylbenzènes de formule

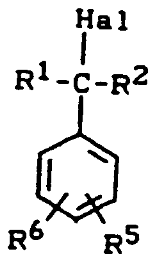

dans laquelle

Hal représente le chlore ou le brome et

$R^1$, $R^2$, $R^5$ et $R^6$ ont la définition indiquée ci-dessus,

en présence de catalyseurs acides, à 50-200 ° C, puis on continue de faire réagir à des températures de 50 à 250 ° C les acides hydroxybenzoïques aralkylés obtenus ou leurs esters, avec des amines de formule

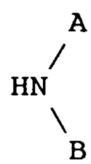

dans laquelle

A et B ont la définition indiquée ci-dessus.

**3.** Utilisation des hydroxybenzamides polyaralkylés suivant la revendication 1 comme inhibiteurs de corrosion.